Europäisches Patentamt

European Patent Office

Office européen des brevets

(11) Veröffentlichungsnummer : **0 088 266**
**B1**

# EUROPÄISCHE PATENTSCHRIFT

(45) Veröffentlichungstag der Patentschrift :
20.02.85

(51) Int. Cl.⁴ : **C 01 B 25/165**

(21) Anmeldenummer : 83101594.6

(22) Anmeldetag : 19.02.83

(54) **Verfahren zur Herstellung von Alkalihypophosphit-Lösungen.**

(30) Priorität : 04.03.82 DE 3207716

(43) Veröffentlichungstag der Anmeldung :
14.09.83 Patentblatt 83/37

(45) Bekanntmachung des Hinweises auf die Patenterteilung : 20.02.85 Patentblatt 85/08

(84) Benannte Vertragsstaaten :
BE CH DE FR GB IT LI NL SE

(56) Entgegenhaltungen :
DE-A- 2 006 632
DE-B- 1 112 054
DE-B- 2 125 587
FR-A-  928 133
GB-A-  803 179
US-A- 4 265 866

(73) Patentinhaber : HOECHST AKTIENGESELLSCHAFT
Postfach 80 03 20
D-6230 Frankfurt am Main 80 (DE)

(72) Erfinder : Elsner, Georg, Dr.
Dr. Krauss Strasse 5
D-5030 Hürth-Knapsack (DE)
Erfinder : Hack, Hermann
Richard Strasse 33
D-5042 Erftstadt 12 (DE)

Jouve, 18, rue St-Denis, 75001 Paris, France

## Beschreibung

Alkalihypophosphite werden bekanntermaßen durch Umsetzung von gelbem Phosphor mit Alkalihydroxiden oder -carbonaten hergestellt, wobei als Nebenprodukt zwangsläufig Phosphorwasserstoff ($PH_3$) entsteht (DE-B-1 112 054). Da dieses $PH_3$ dabei nur in verdünnter Form als Gasgemisch mit Wasserstoff anfällt und für weitere Umsetzung nicht ohne weiteres einsetzbar ist, wurde schon versucht, ihn zu $P_2O_5$ verbrennen (DE-C-2 125 587) oder mit Hilfe von Wasserstoffperoxidlösungen zu oxidieren (US-A-4 265 866).

Ersteres ist bekanntlich nur mittels einer sehr aufwendigen Rauchgaswäsche möglich, die sehr kapitalintensiv ist und daher beträchtliche Kosten verursacht ; letzteres geschieht, indem man den $PH_3$ in ein Rührgefäß leitet und dort in einer stark sauren Lösung von hypophosphoriger Säure mit einer wäßrigen $H_2O_2$-Lösung zu hypophosphoriger Säure oxidiert, welche durch Zugabe von Alkaliverbindungen in üblicher Weise in Alkalihypophosphite umgewandelt und aufgearbeitet werden kann.

Dabei ist es problematisch, in dem Rührgefäß über der $H_2O_2$-haltigen Lösung eine ausreichend inerte Atmosphäre aufrecht zu erhalten, um eine Entzündung des $PH_3$-Gasgemisches zuverlässig zu verhindern.

Beiden bekannten Verfahren ist außerdem der Nachteil gemeinsam, daß die Handhabung größerer Mengen von Phosphorwasserstoff wegen seiner hochtoxischen Natur und seiner Selbstentzündlichkeit äußerst schwierig und nur mit hohen Sicherheitsauflagen möglich ist, die erhebliche Kosten verursachen.

Überraschenderweise wurde nun gefunden, daß man die bei der Herstellung von Alkalihypophosphitlösungen durch Umsetzung von gelbem Phosphor mit wäßrigen Lösungen von Alkalihydroxiden und/oder -carbonaten sowie Reaktion des dabei als Nebenprodukt entstehenden Phosphorwasserstoffs mit einer wäßrigen Lösung von Wasserstoffperoxid, auftretenden Schwierigkeiten leicht überwinden kann, wenn man die Wasserstoffperoxidlösung dem Umsetzungsgemisch des Phosphors und der genannten Lösungen der Alkaliverbindungen zusetzt. Dabei empfiehlt es sich, dem Umsetzungsgemisch die Wasserstoffperoxidlösung in insgesamt einer zur Oxidation des entstehenden Phosphorwasserstoffs ausreichenden Menge und mit einer solchen Geschwindigkeit zuzusetzen, die der Bildungsgeschwindigkeit des Phosphorwasserstoffs entspricht.

Vorzugsweise wird der Phosphor, die Alkaliverbindungen und das Wasserstoffperoxid im Molverhältnis von etwa 2 : 2 : 1 eingesetzt. Im allgemeinen pflegt man so zu verfahren, daß man in ein Reaktionsgefäß unter Inertgasatmosphäre kontinuierlich den gelben Phosphor und die Lösungen der Alkaliverbindungen einträgt und unter intensiver Durchmischung bei Temperaturen zwischen 50 und 100 °C miteinander umsetzt. Zu dem sich bildenden Umsetzungsgemisch setzt man gleichzeitig die Wasserstoffperoxidlösung mit einer solchen Geschwindigkeit zu, daß in dem das Reaktionsgefäß verlassende Gas gerade kein Phosphorwasserstoff mehr nachweisbar ist.

Da auf diese Weise praktisch kein $PH_3$ aus dem Reaktionsgemisch entweicht, erzielt man in der resultierenden Reaktionslösung einen beträchtlich höheren Hypophosphitgehalt als bei Umsetzungen, bei denen keine $H_2O_2$-Zugabe zum Umsetzungsgemisch erfolgt, während der Anteil des Phosphits nur geringfügig steigt. Somit ist also durch die erfindungsgemäße Arbeitsweise sowohl ein wirtschaftlicher wie auch sicherheitstechnisch bedeutsamer Vorteil gegenüber den herkömmlichen Verfahrensweisen gegeben.

Die erfindungsgemäße Arbeitsweise soll durch die nachfolgenden Beispiele näher erläutert, aber nicht beschränkt werden :

Beispiel 1

In einem Mehrhalskolben mit Rührer, Rückflußkühler, Gaseinlaß (für $N_2$), und drei Tropftrichtern für Phosphor, Natronlauge (50 Gew.%) und Wasserstoffperoxid (30 Gew.%) werden 500 ml Wasser vorgelegt und mittels Außenheizung auf 80 °C erwärmt. Die gesamte Apparatur wird mit einem schwachen Stickstoffstrom durchspült, das Abgas in einen Bunsenbrenner geführt und verbrannt. Wenn die Reaktionstemperatur von 80 °C erreicht ist, beginnt man, den Phosphor, der im Tropftrichter aufgeschmolzen wurde, zuzutropfen ; gleichzeitig auch die Natronlauge. Die Reaktion setzt spontan ein und führt zu einer deutlichen Temperaturerhöhung. Wenn sich durch Gelbfärbung der Bunsenbrennerflamme ein geringes Auftreten von $PH_3$ bemerkbar macht, wird die 30 gewichts%ige $H_2O_2$-Lösung zugetropft. Es tritt nun mehr noch eine deutliche Temperaturerhöhung auf, so daß gekühlt werden muß, um die Reaktionstemperatur bei etwa 90 °C zu halten. Die Wasserstoffperoxidzugabe wird so gesteuert, daß praktisch kein $PH_3$ entweicht, erkennbar an der kaum sichtbaren Gelbfärbung der Bunsenbrennerflamme. Nach etwa 30 min sind auf diese Weise 2 mol P, 2 mol NaOH und 1 mol $H_2O_2$ umgesetzt. Zur Vervollständigung der Reaktion wird noch 10 min unter Rühren auf 95 °C erwärmt und sodann auf Raumtemperatur abgekühlt. Es resultiert eine klare farblose Lösung, welche mit Hilfe der kernmagnetischen Resonanzspektroskopie (NMR) auf ihren Gehalt an verschiedenen P-Verbindungen untersucht wird. Es zeigt sich, daß Phosphor zu 77 % als Hypophosphit, zu 22 % als Phosphit und zu 1 % als Phosphat vorliegt.

Beispiel 2 (Vergleichsbeispiel)

In einer Apparatur entsprechend Beispiel 1 werden 2 mol Phosphor und 2 mol Natronlauge zur Umsetzung gebracht. Die Bedingungen sind wie in Beispiel 1, nur daß auf die Zugabe des Wasserstoffperoxids verzichtet wird und daß zur Absorption des PH₃ zwischen Kühler und Brenner ein mit Zeolith gefüllter Absorptionsturm angebracht wurde. Nach Beendigung der Reaktion wird die Reaktionslösung NMR-spektroskopisch untersucht. Es ergibt sich ein Verhältnis von 74 % Hypophosphit zu 26 % Phosphit. Die Menge des absorbierten Phosphorwasserstoffs beträgt 13 g ~ 19 % des eingesetzten Phosphors. Somit sind nur 58 % des eingesetzten Phosphors in das gewünschte Produkt überführt worden.

## Ansprüche

1. Verfahren zur Herstellung von Alkalihypophosphitlösungen durch Umsetzung von gelbem Phosphor mit wäßrigen Lösungen von Alkalihydroxiden und/oder -carbonaten sowie Reaktion des dabei als Nebenprodukt entstehenden Phosphorwasserstoffs mit einer wäßrigen Lösung von Wasserstoffperoxid, dadurch gekennzeichnet, daß man die Wasserstoffperoxidlösung dem Umsetzungsgemisch des Phosphors mit den genannten Lösungen der Alkaliverbindungen zusetzt.

2. Verfahren nach Anspruch 1, dadurch gekennzeichnet, daß man dem Umsetzungsgemisch die Wasserstoffperoxidlösung in insgesamt einer zur Oxidation des entstehenden Phosphorwasserstoffs ausreichenden Menge und mit einer solchen Geschwindigkeit zusetzt, die der Bildungsgeschwindigkeit des Phosphorwasserstoffs entspricht.

3. Verfahren nach Anspruch 1 oder 2, dadurch gekennzeichnet, daß man den Phosphor, die Alkaliverbindungen und das Wasserstoffperoxid im Molverhältnis 2 : 2 : 1 einsetzt.

4. Verfahren nach einem der Ansprüche 1 bis 3, dadurch gekennzeichnet, daß man in ein Reaktionsgefäß unter Inertgasatmosphäre kontinuierlich den gelben Phosphor und die Lösungen der Alkaliverbindungen einträgt und unter intensiver Durchmischung bei Temperaturen zwischen 50 und 100 °C miteinander umsetzt, wobei man gleichzeitig dem sich bildenden Umsetzungsgemisch die Wasserstoffperoxidlösung mit einer solchen Geschwindigkeit zusetzt, daß in dem das Reaktionsgefäß verlassende Gas gerade kein Phosphorwasserstoff mehr nachweisbar ist.

## Claims

1. Process for making alkali metal hypophosphite solutions by reacting yellow phosphorus with an aqueous solution of an alkali metal hydroxide and/or carbonate and reacting the resulting hydrogen phosphide by-product with an aqueous solution of hydrogen peroxide, which comprises adding the hydrogen peroxide solution to the mixture obtained by reacting the phosphorus with said alkali metal compound solutions.

2. Process as claimed in claim 1, wherein the hydrogen peroxide solution is added to the reaction mixture in an overall quantity sufficient for oxidizing the resulting hydrogen phosphide and at a rate corresponding to the formation velocity of the hydrogen phosphide.

3. Process as claimed in claim 1 or 2, wherein the phosphorus, alkali metal compound and hydrogen peroxide are used in a molar ratio of 2 : 2 : 1.

4. Process as claimed in any of claims 1 to 3, wherein yellow phosphorus and alkali metal compound solutions are introduced continuously under inert gas into a reaction vessel and reacted while being intensively mixed at temperatures between 50 and 100 °C, the resulting reaction mixture being simultaneously admixed with hydrogen peroxide solution at a rate sufficient for the gas issuing from the reaction vessel to be free from just detectable hydrogen phosphide.

## Revendications

1. Procédé de préparation de solutions d'hypophosphites alcalins par réaction de phosphore blanc avec des solutions aqueuses d'hydroxydes et/ou carbonates alcalins et ensuite réaction de l'hydrogène phosphoré obtenu comme produit secondaire avec une solution aqueuse de peroxyde d'hydrogène, caractérisé en ce que l'on ajoute la solution de peroxyde d'hydrogène au mélange de réaction du phosphore avec les solutions des composés alcalins mentionnés.

2. Procédé selon la revendication 1, caractérisé en ce que l'on ajoute la solution de peroxyde d'hydrogène au mélange de réaction en quantité totale suffisante pour l'oxydation de l'hydrogène phosphoré se formant et à une vitesse correspondant à la vitesse de formation de l'hydrogène phosphoré.

3. Procédé selon la revendication 1 ou 2, caractérisé en ce que l'on utilise le phosphore, les composés alcalins et le peroxyde d'hydrogène dans des proportions molaires de 2 : 2 : 1.

4. Procédé selon l'une des revendications 1-3, caractérisé en ce que l'on introduit en continu le phosphore blanc et les solutions des composés alcalins dans un récipient de réaction en atmosphère de gaz inerte et on les fait réagir ensemble avec agitation énergique à des températures comprises entre 50 et 100 °C et on ajoute simultanément au mélange de réaction qui se forme la solution de peroxyde d'hydrogène à une vitesse telle que l'hydrogène phosphoré ne soit juste plus décelable dans le gaz sortant du récipient de réaction.